# EUROPEAN PATENT SPECIFICATION

(11) **EP 2 258 610 B1**
(45) Date of publication and mention of the grant of the patent: **09.04.2014**
(21) Application number: 09728075.4
(22) Date of filing: 18.02.2009
(51) Int. Cl.: B62J 17/00, B62K 19/46

(54) **Saddle-ride-type vehicle**
Sattelfahrzeug
Véhicule du type à selle

(30) Priority: 31.03.2008 JP 2008094014
(43) Date of publication of application: 08.12.2010
(73) Proprietor: Honda Motor Co., Ltd., Minato-ku Tokyo 107-8556 (JP)
(72) Inventor: Luca, CARUSO, I-00143 Roma (IT)
(74) Representative: Ilgart, Jean-Christophe
(86) International application number: PCT/JP2009/052782
(87) International publication number: WO 2009/122799

(56) References cited:
- WO-A1-2009/038051
- JP-A- 5 310 164
- JP-A- 11 278 340
- JP-A- 2000 033 890
- JP-A- 2000 033 890
- JP-A- 2005 088 798
- JP-U- H0 556 779

## Description

### BACKGROUND OF THE INVENTION

### 1. Field of the Invention

The present invention relates to the vehicle-body cover structure of a saddle-ride type vehicle, and more particularly to the structure in which a garnish constituting a member separate from a rear cover is arranged below a seat. Here, in this specification, directions of "frontward" and "rearward", "leftward" and "rightward", and "upward" and "downward" are determined by using the advancing direction of the vehicle in a state that a part is mounted on the vehicle. Further, with respect to an "inside" and an "outside", the "inside" implies a side which constitutes a center side of the vehicle body in a state that a part is mounted on the vehicle and the "outside" implies a side opposite to the "inside" in a state that a part is mounted on the vehicle.

### 2. Description of the Related Art

As a rear vehicle-body cover which covers a seat from below, there has been known a rear cover which covers at least both left and right sides of the seat from below, and there may be a case that the rear cover is formed using a mold as a large-sized resin-made part.

[Patent Document 1] JP 07-69261 A

With respect to such a large-sized mold-formed product, a gap may be formed at a mating portion of the mold-formed product with a separate part arranged in a periphery of the mold-formed product and, particularly, with a seat having a large change ratio of a shape. For preventing the appearance from being deteriorated due to the generation of the gap, it may be necessary to adjust a cover shape by modifying a mold.

However, it is difficult to enhance the molding accuracy in operation by merely modifying a portion of the mold for forming the large-sized part. Further, the enhancement of molding accuracy of a portion of the part is also difficult in view of a molten resin flow. JP H05 56 779 U discloses a saddle-ride-type vehicle according to the preamble of claim 1.

Accordingly, it is an object of the present invention to provide a saddle-ride-type vehicle comprising a vehicle-body cover structure which can maintain the favorable appearance of a mating portion between a seat and a rear cover without modifying or remodeling a large-sized mold.

### SUMMARY OF THE INVENTION

To overcome the above-mentioned drawbacks, the invention provides a saddle-ride-type vehicle comprising a saddle-ride-type seat and vehicle-body cover structure comprising a rear cover which covers both left and right sides of the saddle-ride-type seat from below,
wherein a longitudinal portion of the rear cover which is arranged adjacent to a lower edge of the seat and extends along the lower edge of the seat is covered with a separate cover which is constituted as a part separate from an upper edge portion of the rear cover and the separate cover is arranged so as to overlap with the rear cover from above, wherein a storing box is arranged below the seat,
the rear cover is resin-made, and an upper edge portion of the separate cover is inserted into a recessed portion which is arranged on a lower surface of a side edge portion of the storing box, and a lower edge portion of the separate cover is engaged with the rear cover.

Advantageously in the saddle-ride-type vehicle, the separate cover is constituted of a pair of left and right separate covers which are arranged on at least both front sides of the rear cover, rear upper edge portions which are continuously formed with respective rear ends of the separate covers are formed on the rear cover, and besides to the upper edges of the separate covers, the rear upper edge portions are also inserted into recessed portions arranged on lower surfaces of side edge portions of the storing box.

Advantageously in the saddle-ride-type vehicle, a carrier or a grip which has a front portion thereof opened and has a substantially U-shape is arranged so as to surround both lateral sides and a rear side of a rear end portion of the seat, and a rear end portion of the separate cover extends to the vicinity of a front end of the carrier or the grip.

Advantageously in the saddle-ride-type vehicle, the upper edge portion of the separate cover is formed in an upwardly raised flange shape and is slightly inclined toward the center side in the vehicle width direction from a perpendicular position.

According to the invention, by forming only the portion of the rear cover which extends along the lower edge of seat into the separate body separate from the rear cover, a mold for forming the rear cover can be made small in size. Accordingly, the remodeling of the mold is facilitated thus enhancing the improvement of the molding accuracy.

According to the invention, the separate body cover overlaps with the rear cover and hence, the vehicle-body cover portion which extends along the lower edge of the seat has the duplicate structure thus reinforcing the upper edge portion of the rear cover with the separate cover.

According to the invention, the upper edge of the separate cover can be fixed by making use of the side edge of the storing box, and the upper edge of the separate cover is continuously formed with the storing box and hence, no gap is formed at a mating portion between both members whereby the appearance can be enhanced.

According to the invention, the rear upper edge portion which is continuously formed with the respective rear ends of the separate cover is formed on the rear cover, and the upper edge of the rear cover is inserted into the recessed portion arranged on the lower surface of the side edge portion of the storing box together with the upper edge of the separate cover. Accordingly, the upper edge of the rear cover which surrounds the periphery of the storing box is continuously formed with the storing box and hence, no gap is formed also at a rear portion of the rear cover where the separate body is not provided thus enhancing the appearance of the vehicle.

According to the invention, by extending the separate cover to the vicinity of the front end of the carrier or the grip, a design which arranges the separate cover contiguously with the carrier or the grip thus providing a feeling of integrity to the carrier or the grip and the rear cover thus making these parts inconspicuous.

### BRIEF DESCRIPTION OF THE DRAWINGS

Fig. 1 is a side view showing an appearance of a scooter-type motorcycle according to this embodiment;
Fig. 2 is a view showing the inside of the scooter-type motorcycle shown in Fig. 1 by indicating a vehicle-body cover and the like using an imaginary line;
Fig. 3 is a perspective view of a floor portion;
Fig. 4 is a perspective view of a small assembly of a rear vehicle-body cover;
Fig. 5 is a plan view of the small assembly of the rear vehicle-body cover shown in Fig. 4;
Fig. 6 is a cross-sectional view taken along a line 6-6 in Fig. 5;
Fig. 7 is an enlarged view of a garnish portion;
Fig. 8 is a perspective view of a rear vehicle-body cover;
Fig. 9 is a side view of a rear cover;
Fig. 10 is a plan view of the rear cover;
Fig. 11 is a side view of the garnish portion;
Fig. 12 is a front view of the garnish portion;
Fig. 13 is a cross-sectional view of a joint portion of a mounting hole and a boss;
Fig. 14 is a plan view of a rear carrier;
Fig. 15 is a plan view of a tail lamp unit;
Fig. 16 is a back view of the tail lamp unit;
Fig. 17 is a horizontal cross-sectional view taken along a line 17-17 in Fig. 16;
Fig. 18 is a perspective view showing a lower portion of a floor under skirt;
Fig. 19 is a side view of the floor under skirt;
Fig. 20 is a plan view of the floor under skirt;
Fig. 21 is a side view of an under cover; and
Fig. 22 is a plan view of the under cover.

### DETAILED DESCRIPTION OF THE PREFERRED EMBODIMENTS

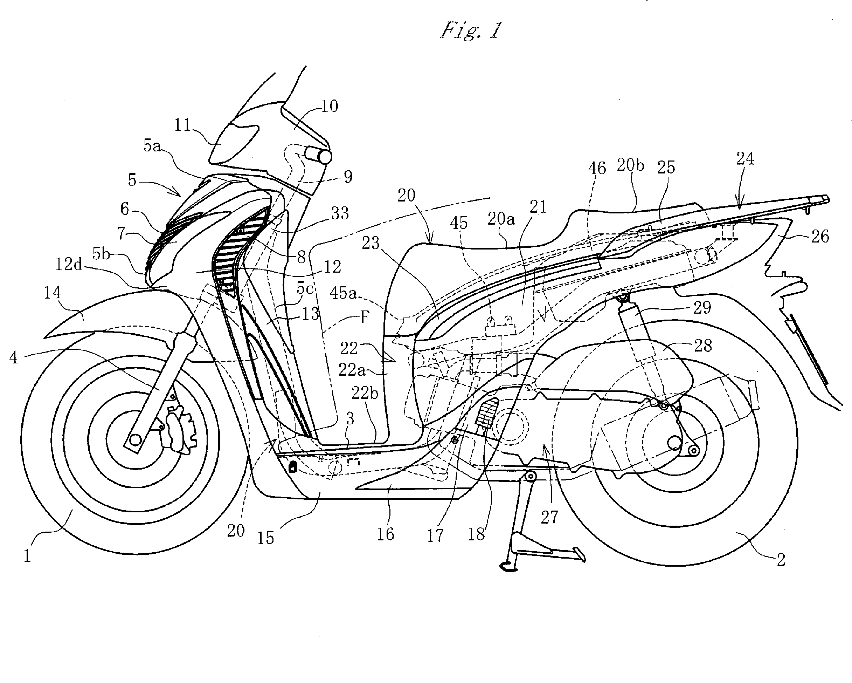

Hereinafter, one embodiment of the present invention is explained in conjunction with drawings. Fig. 1 is a side view showing an appearance of a scooter-type motorcycle according to an embodiment which constitutes one example of a saddle-ride-type vehicle. The motorcycle has a low-floor-type step floor 3 which is arranged between a front wheel 1 and a rear wheel 2. An upper portion of a front fork 4 which supports left and right sides of the front wheel 1 is covered with a resin-made front vehicle-body cover 5. Numeral 6 indicates a front louver, numeral 7 indicates a front winker, and numeral 8 indicates a wind-discharge port. The motorcycle of the present invention is configured to introduce a traveling wind into the inside of the front vehicle-body cover 5 from the front louver 6 which constitutes an air-intake opening of the present invention and to discharge a warm discharge wind formed due to cooling of a radiator described later toward sides of the vehicle body from a wind-discharge opening 8 formed in a side surface of the front vehicle-body cover 5. Numeral 9 indicates a handle, numeral 10 indicates a handle cover, and numeral 11 indicates a head light.

The front vehicle-body cover 15 includes a front-side front cover 12 and a rear-side leg shield 13 which are longitudinally joined to each other. The front cover 12 is formed in a substantially L-shape as viewed in a side view and a front nose 12d formed on a vertically intermediate portion of the front cover 12 projects frontward at a position above a front fender 14. A lower end portion of the front cover 12 extends toward a portion behind the front wheel 1 and is connected to a front end portion of a floor under skirt 15 which covers the step floor 3 from below. On a rear side surface of the floor under skirt 15, an undercover 16 which constitutes a part separate from the floor under skirt 15 is detachably mounted. The floor under skirt 15 and the undercover 16 are also made of a resin. To an upper edge of a rear end portion of the undercover 16, a lower end portion of a step holder 17 is connected. On a side surface of the step holder 17, a tiltable pillion step 18 is arranged.

The leg shield 13 is a member provided for covering a front portion of a leg portion F of a rider who puts on his/her foot on the step floor 3. The leg shield 13 includes a substantially-L-shaped portion as viewed in a side view corresponding to the front cover 12, and the wind-discharge opening 8 is formed in side surfaces in the vicinity of such a bent portion which projects frontward. A lower end portion of the leg shield 13 is engaged with a front portion of the step floor 3. A tandem seat 20 is arranged behind the leg shield 13 with the step floor 3 sandwiched between the tandem seat 20 and the leg shield 13. A height of a front end portion of the tandem seat 20 is substantially equal to a height of the wind-discharge port 8, and the front end portion is arranged behind the wind-discharge opening 8. Left and right sides of a lower portion of the seat 20 are covered with a rear cover 21. A front portion of the seat 20 is covered with a center cover 22. An engine is surrounded by the front portion of the rear cover 21 and the center cover 22. The rear cover 21 and the center cover 22 are also made of a resin.

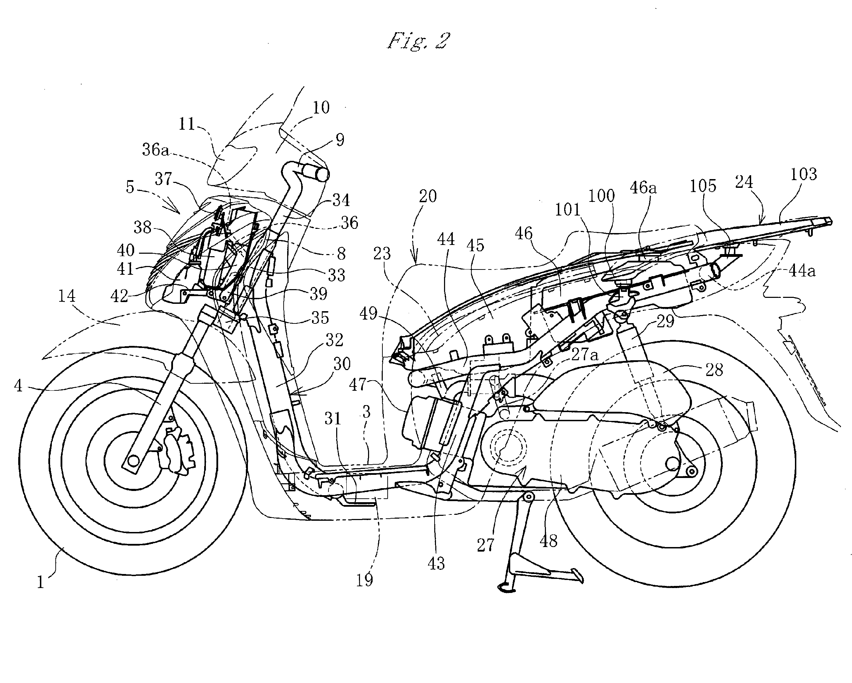

The center cover 22 includes a vertically-extending portion 22a and a leg portion 22b which is bent in the substantially horizontal direction from a lower end of the vertically-extending portion 22a and, then, extends frontward. The vertically-extending portion 22a constitutes a maintenance lid for the engine. In the inside of an upper end portion of the vertically-extending portion 22a, a support portion 45a of a hinge for rotatably connecting the front end portion of the seat 20 is housed. The leg portion 22b constitutes a maintenance lid which covers a maintenance opening (being omitted from the drawing) formed in the step floor 3 in an openable/closable manner thus enabling the maintenance of a battery 19 (Fig. 2) and the like which are supported below the leg portion 22b.

Between the seat 20 and the rear cover 21, a substantially-strip-shaped garnish 23 is arranged, and the garnish 23 covers a portion which is formed between an upper edge portion of a storing box described later and the upper edge portion of the rear cover 21 and extends in the longitudinal direction in a substantially strip shape. The garnish 23 corresponds to a separate cover of the present invention. The garnish 23 extends over a boundary portion between a front seat 20a and a rear seat 20b and extends downward to a position below the rear seat 20b in the vicinity of the boundary portion. A distal end portion of a grip portion 25 which constitutes a portion of a rear carrier 24 is arranged in the vicinity of a rear end portion of the garnish 23. The rear carrier 24 is a member which is used as a carrier as well as a grip of the present invention. The rear carrier 24 has a front portion thereof opened thus having a substantially U-shape as viewed in a plan view.

The garnish 23 and the rear carrier 24 are painted with the same metallic color thus producing a feeling of integrity and appear as if the garnish 23 is continuously formed with the grip portion 25.

Numeral 26 indicates a tail lamp unit which is mounted on a rear end portion of the rear cover 21, numeral 27 indicates a swing-type power unit, numeral 28 indicates an air cleaner, and numeral 29 indicates a rear cushion.

Fig. 2 is a view showing the inner structure of the vehicle body frame 30 and the like by indicating the vehicle-body cover and the like shown in Fig. 1 with an imaginary line. The vehicle body frame 30 includes a floor portion 31 which supports the step floor 3 thereon. The floor portion 31 has a longitudinally-intermediate portion thereof formed into a substantially horizontal portion, and a front end portion of the floor portion 31 is raised by being bent upwardly and is connected to a lower portion of a single down portion 32 which is arranged along the center of the vehicle body and extends obliquely in the vertical direction. A head pipe 33 is supported on a distal end (upper end) of the down portion 32, and a handle shaft 34 is rotatably supported on the head pipe 33. The handle shaft 34 has a lower end thereof connected to the front fork 4 by way of a bottom bridge 35 and has an upper end thereof connected to the handle 9.

Numeral 36 indicates a stay which projects in the oblique upward and frontward direction from a vertically intermediate portion of the head pipe 33 and supports a horn 37. A radiator 38 is arranged below the horn 37 and in front of the head pipe 33 and is supported on a bracket 36a which projects in the lateral direction at a distal end portion of the stay 36. Numeral 39 is a bracket which is mounted on a lower portion of a front surface of the head pipe 33, numeral 40 indicates a wind-discharge guide, and numeral 41 indicates a reserve tank for storing a radiator liquid. The reserve tank 41 is supported on the head pipe 33 by way of the stay 42, the bracket 39 and the like. The horn 37, the radiator 38, and the reserve tank 41 are arranged in a substantially stepped manner as viewed in a side view so as to project frontward while being gradually lowered along a shape of a front portion of the front vehicle-body cover 5.

A rear portion of the floor portion 31 is formed into a pillar portion 43 which is raised upward while bending, and a front end portion of a rear frame 44 is supported on an upper end of the pillar portion 43. A resin-made storing box 45 which is opened upwardly is supported on a front portion of the rear frame 44, and a fuel tank 46 is supported on the rear frame 44 behind the storing box 45. These parts are covered with the openable/closable seat 20 from above. By opening the seat 20, articles can be put into or taken out from the inside of the storing box 45 and oil can be filled in the fuel tank 46. Numeral 46a indicates an oil-filling cap.

The swing-type power unit 27 is swingably supported on the rear frame 44. The swing-type power unit 27 is a unitary body formed of an engine 47 and a transmission 48 and is swingably supported on the rear frame 44 in the vicinity of a connection portion where the swing-type power unit 27 is connected with the pillar portion 43 through a link mechanism 27a in the vicinity of the engine 47.

The rear wheel 2 is supported on a rear end portion of the transmission 48, and a rear cushion unit 29 is arranged between the rear end portion of the transmission 48 and a rear end portion of the rear frame 44. The engine 47 is arranged in a substantially horizontal manner below a front end portion of the rear frame 44 which projects frontward from an upper end of the pillar portion 43, and air is supplied to an intake port of the engine 47 from the air cleaner 28 arranged behind the engine 47 and fuel is supplied to the engine 47 from an electronic fuel injection device 49.

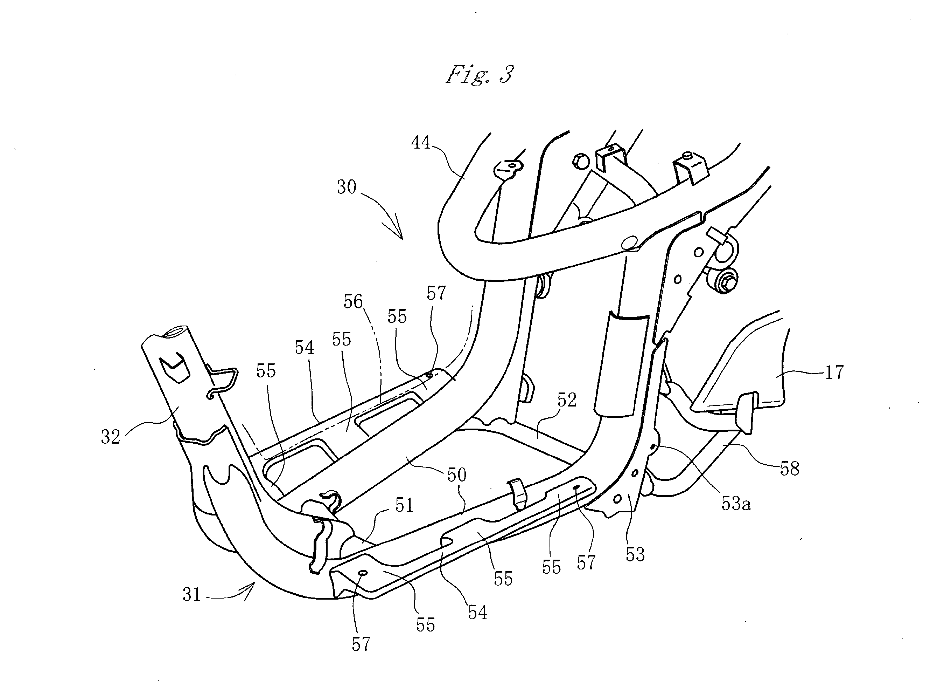

Fig. 3 is a perspective view of the floor portion 31. The floor portion 31 includes a pair of left and right pipe members 50 each of which has front and rear portions thereof bent upwardly. Front portions and rear portions of the respective horizontal portions are respectively connected with each other by cross pipes 51, 52. An intermediate portion of the front cross pipe 51 is welded to a lower end portion of the down portion 32, and the rear cross pipe 52 is welded to lower end portions of the brackets 53 which are welded to the left and right pillar portions 43. Further, to outer surfaces of the respective horizontal portions of the left and right pipe members 50, a plate-shaped support stay 54 made of metal is connected by welding. The support stays 54 extend along the horizontal portions of the pipe members 50 in the longitudinal direction and project outwardly. The step floor 3 is supported on upper surfaces of the support stays 54. The support stay 54 projects in a posture that the support stay 54 is inclined to increase a height thereof toward a distal end side of the support stay 54, and a height of an upper surface of the distal end side is set substantially equal to a height of an upper surface of the horizontal portion of the pipe member 50.

Each support stay 54 forms a projection 55 which projects toward the pipe member 50 at three portions thereof, that is, at front and rear end portions and a center portion thereof. By bringing respective distal end portions of the projections 55 into contact with a side surface of the pipe member 50 and also welding the distal end portions to the side surface, the support stays 54 are joined to the pipe member 50 by welding at three portions in the longitudinal direction. Numeral 56 indicates cables which are arranged by making use of the support stays 54 and are supported below the support stays 54. Numeral 57 indicates a mounting portion of the step floor 3.

Due to such constitution, with the use of the support stays 54 which are formed of plate-shaped members, the rigidity of the floor portion 31 can be increased and a weight of the floor portion 3 can be decreased. Further, by forming the support stay 54 into a plate shape, the support stay 54 can easily support the cables 56.

The rear frame 44 is a pipe member which has a curved front end portion and a pair of left and right sides which extend rearward thus having an approximately U shape in a plan view. Respective rear end portions of the left and right pipe members are joined to each other using a cross pipe 44a (Fig. 2).

Numeral 58 indicates a step frame which projects sideward from a rear portion of the floor portion 31 and supports the pillion step 18 (Fig. 1).

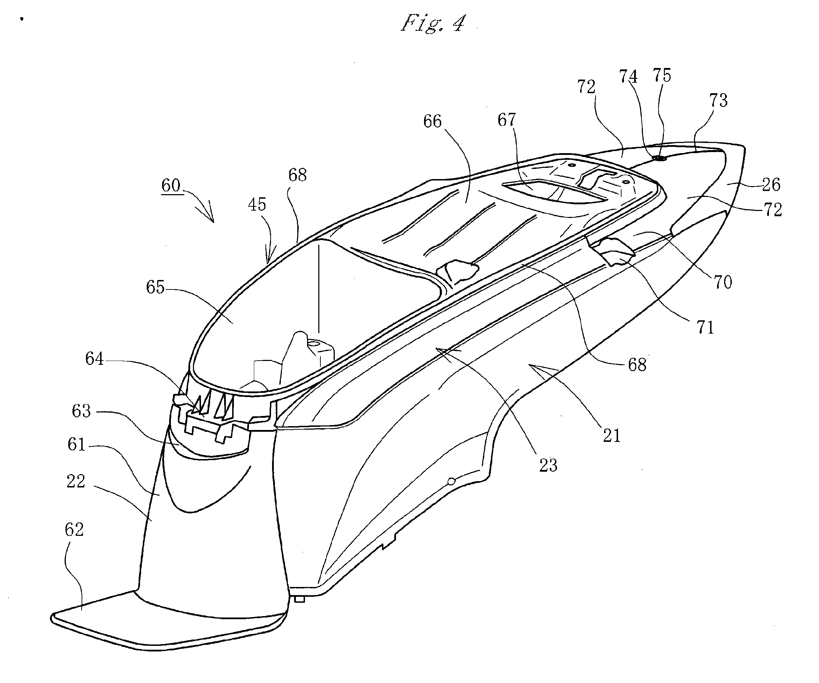

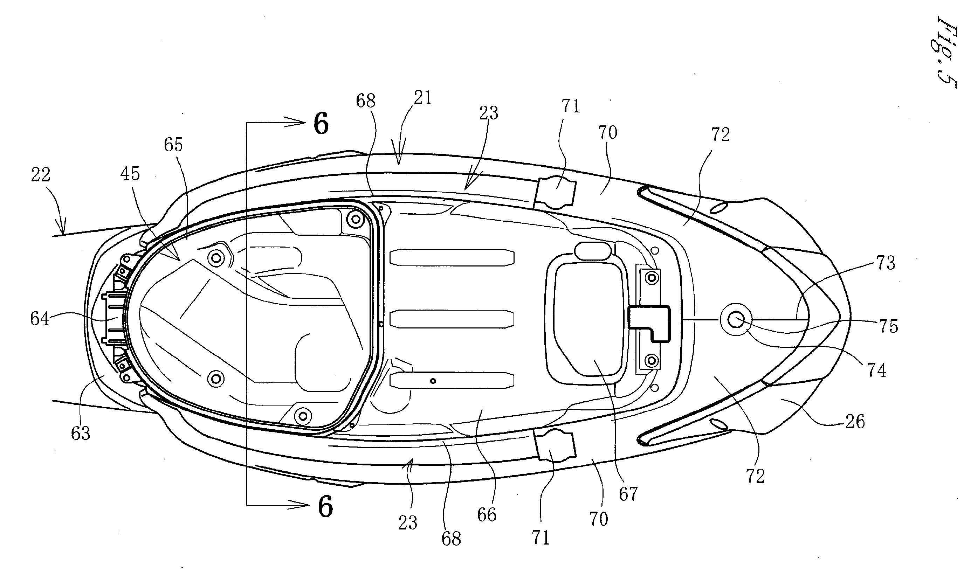

Next, the explanation is made with respect to the vehicle-body cover structure on a vehicle-body rear-portion side which also covers a lower portion of the seat. Fig. 4 is a perspective view of a rear-vehicle-body-cover small assembly 60 which is integrally formed on a periphery of the storing box 45, and Fig. 5 is a plan view of the rear-vehicle-body-cover small assembly 60. The rear-vehicle-body-cover small assembly 60 is constituted of the center cover 22 which covers a front portion of the storing box 45 and the garnish 23 which is mounted on an upper edge portion of the rear cover 21 covering both left and right sides of the storing box 45. The garnish 23 constitutes a vehicle-body-cover upper mounting member according to the present invention.

The center cover 22 includes a vertically-extending portion 61 and a leg portion 62, and the vertically-extending portion 61 covers a lower portion of a front end portion of the storing box 45 in a detachable manner. This structure enables the maintenance of the engine 47 (Fig. 2) arranged below the storing box 45 and the like. An upper end portion of the center cover 22 forms a projecting portion 63 which projects frontward. A hinge mounting portion 64 which is formed on a front end of the storing box 45 in a frontward projecting manner is housed in the projecting portion 63. The leg portion 62 is a lid-shaped portion which is bent from a lower end portion of the vertically extending portion 61, and expands frontward. By opening or closing a maintenance hole formed in the step floor 3 using the leg portion 62, it is possible to perform the maintenance of the battery 19 (Fig. 2) and the like.

The storing box 45 includes a unitary body formed of a box portion 65 which is arranged on a front side of the storing box 45 and a lid portion 66 which extends long rearward from a rear portion of the box portion 65. The box portion 65 is opened upwardly and defines a space of a relatively large capacity in which a large article such as a helmet can be stored.

The lid portion 66 is arranged below the seat 20 and extends to a rear end portion of the seat 20 while covering the fuel tank 46 (Fig. 2) from above. Numeral 67 indicates an oil-filling opening portion and an oil filling cap 46a (Fig. 2) of the fuel tank 46 faces the oil-filling opening portion 67. Numeral 75 indicates a mounting hole which is formed in a rear portion of the rear cover 21 on the center of the vehicle-body center, and the mounting hole 75 is provided for mounting the rear carrier 24 on the rear frame 44 side. A flange 68 is formed in left and right edge portions of the storing box 45, and an upper edge portion of the garnish 23 is fitted in the inside of the flange 68.

The garnish 23 overlaps with a shoulder portion 70 of the rear cover 21, and the garnish 23 is formed in a longitudinally elongated shape and extends to the vicinity of the oil-filling opening portion 67 from the vicinity of a front end portion of the storing box 45. In the shoulder portion 70 which is continuously formed with a rear end portion of the garnish 23 and is arranged behind the rear end portion, a mounting hole 71 is formed for mounting a front end portion of the grip 25 on the rear frame 44 side.

The rear cover 21 is split into left and right portions, and the split portions respectively overlap with left and right side surfaces of the storing box 45. The left and right rear covers 21 are aligned with each other in the lateral direction and are integrally joined to each other at tail portions 72, 72 thereof which extend more rearward than a rear end portion of the lid portion 66. Numeral 73 indicates a mating line, numeral 74 indicates a joining boss, and numeral 75 indicates a mounting bolt hole for mounting the rear cover 21 on the vehicle body frame. The tail lamp unit 26 is mounted on a portion ranging from both left and right side surfaces to rear portions of the tail portions 72, 72.

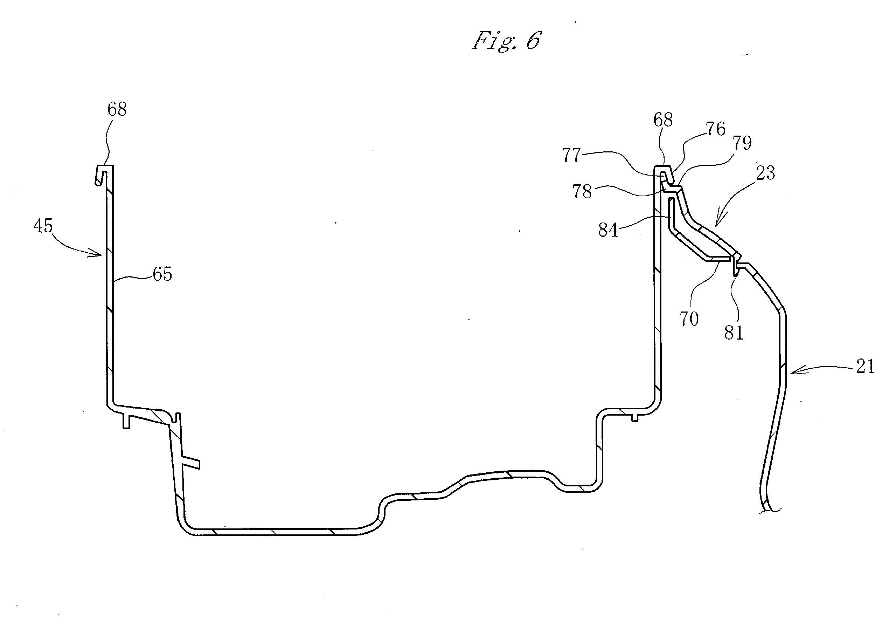

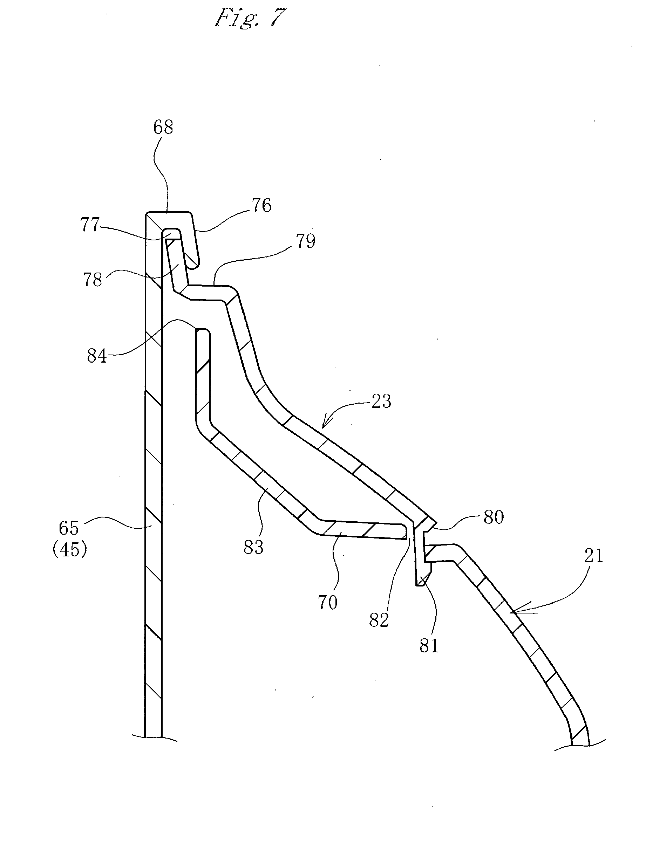

Fig. 6 is a cross-sectional view taken along a line 6-6 in Fig. 5, and Fig. 7 is a part of Fig. 6 and is an enlarged view of the garnish 23. As shown in Fig. 6 and Fig. 7, the flange 68 is bent outward and, thereafter, is further bent downward thus folding back the flange 68. An outer fold-back portion 76 is inclined such that a lower side of the fold-back portion 76 is slightly opened outward. The flange 68 forms a groove 77 which has an approximately reverse-U-shaped cross section in the inside of the folded back portion 76, and the groove 77 opens downward. An upper edge portion 78 of the garnish 23 is fitted into the groove 77.

Although the upper edge portion 78 is formed in an upward raised flange shape, the upper edge portion 78 is slightly inclined toward a box portion 65 side (toward the center side in the vehicle width direction) from a perpendicular position. Accordingly, the fold-back portion 76 and the upper edge portion 78 are brought into close fitting engagement due to mating of respective tapered portions of the folded back portion 67 and the upper edge portion 78. However, by forming a small clearance between a distal end of the upper edge portion 78 and an uppermost portion of the flange 68, it is possible to absorb the size irregularities without being influenced by the size irregularities of the upper edge portion 78.

On a lower end periphery 80 of the garnish 23, a pawl 81 is formed in a downward projecting manner in place, and the pawl 81 is engaged with an engaging hole 82 formed in the shoulder portion 70 of the rear cover 21 from above. The garnish 23 covers the shoulder portion 70 from above in an inclined manner and has an intermediate portion of thereof curved downwardly in a convex shape.

The step-shaped shoulder portion 70 which extends toward the box portion 65 is formed on an upper portion of the rear cover 21. The shoulder portion 70 is formed so as to cover a substantially whole length of the rear cover 21 in the longitudinal direction. A side portion of the shoulder portion 70 on the side of the box portion 65 forms an inclined portion 83, and a distal-end-side portion of the inclined portion 83 is arranged closest to the side surface of the box portion 65 and then is formed into an erected flange 84 which upwardly extends substantially parallel to a side surface of the box portion 65. A slight gap is formed between the erected flange 84 and the box portion 65 thus preventing the erected flange 84 and the box portion 65 from being in contact with each other. Further, an upper end of the erected flange 84 is also arranged below a stepped portion 79 which is formed on a base portion of the upper edge portion 78 in a state the upper end is spaced apart from the stepped portion 79.

Due to such constitution, even when the erected flange 84 is not joined to the flange 68 and the flange 68 and the erected flange 84 are separated from each other thus forming a gap therebetween, with the use of the garnish 23, a mating portion with such a gap which is liable to damage the appearance of the vehicle can be concealed and hence, it is possible to keep the good appearance of the vehicle. Accordingly, the rear cover 21 which is a large-sized part can be formed by molding without taking the mating of the rear cover 21 and the other parts into consideration and hence, the rear cover 21 can be easily formed. Further, the garnish 23 is a relatively small-sized part and hence, a mold used for forming the garnish 23 can be miniaturized whereby the garnish 23 can be easily formed by molding with a high accuracy, and the garnish 23 can be manufactured at a low cost.

In addition, the upper edge portion 78 is fitted in the groove 77 of the flange 68 in a state that the tapered portion of the upper edge portion 78 and the tapered portion of the folded back portion 76 are engaged with each other and hence, the size irregularities can be absorbed whereby it is unnecessary to form the garnish 23 by molding with a high accuracy.

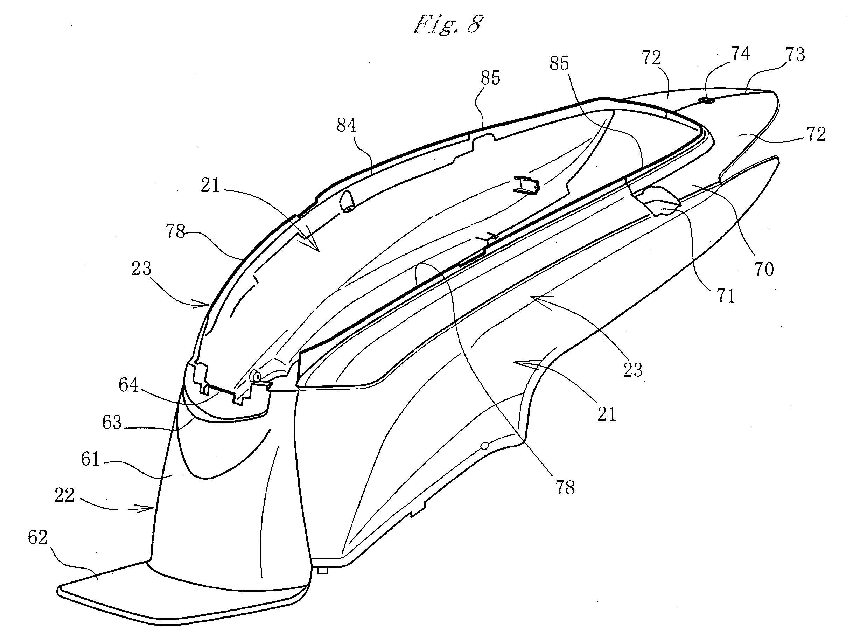

Fig. 8 is a perspective view showing a state in which the rear cover 21, the center cover 22 and the garnish 23 are formed as a unitary body in a state that the storing box 45 is removed. As shown in Fig. 8, the erected flange 84 is arranged at a position below the upper edge portion 78. Here, a rear portion from the vicinity of the mounting hole 71 which is not covered with the garnish 23, makes a rear erected flange 85 which extends rearward and set higher by one step than a height of the erected flange 84 so that to be continuous with the upper edge portion 78. The rear erected flange 85 corresponds to a rear upper edge portion of the present invention which is continuously formed with a rear end of the garnish 23. A portion of the vehicle arranged behind rear end of the garnish 23 is covered with the rear erected flange 85 from the outside and hence, the appearance of the vehicle is not damaged by such a portion and hence, it is unnecessary to provide the garnish 23 to such a portion. Further, the rear erected flange 85 can be directly fitted into the flange 68 in the same manner as the upper edge portion 78 of the garnish 23.

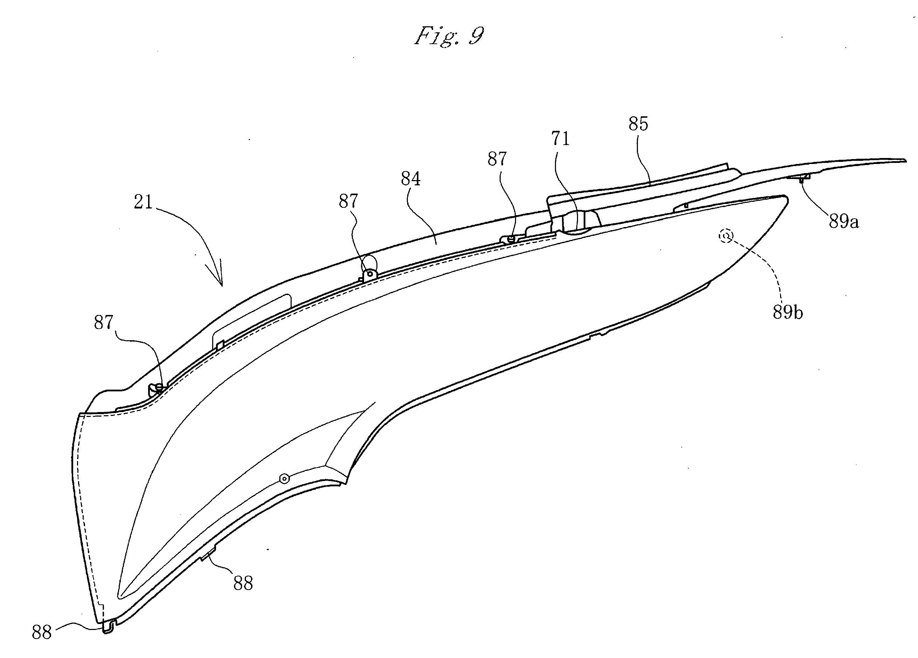

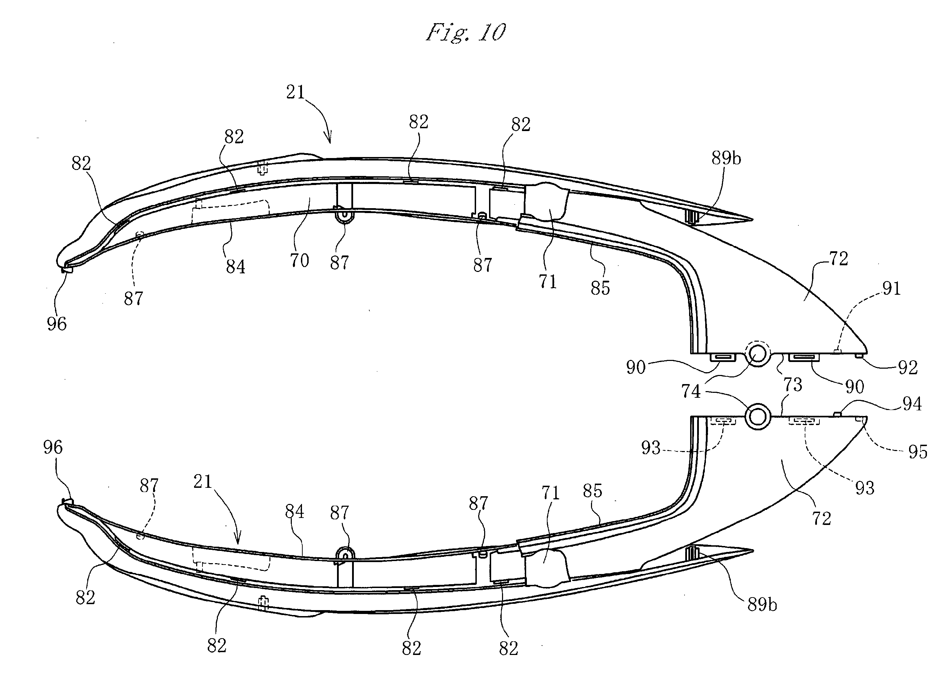

Fig. 9 is a side view of the rear cover 21 and Fig. 10 is a plan view of the rear cover 21. As shown in these drawings, engaging holes 82 are formed in the shoulder portion 70 at a plurality of positions (four positions in this embodiment) in the longitudinal direction. Further, mounting holes 87 are formed in a lower portion of the erected flange 84 at a plurality of positions (three positions in this embodiment) in the longitudinal direction.

Numeral 88 indicates a pawl which is formed on a lower end of a front portion of the rear cover 21 and is inserted into and engaged with the rear extending portion of the step floor 3 from above. Numerals 89a, 89b respectively indicate mounting bosses formed on the tail lamp unit 26, and the tail lamp unit 26 is fixed to the mounting bosses 89a, 89b using bolts.

Here, Fig. 10 shows the left and right rear covers 21, 21. In Fig. 10, pawls 90 are formed along the mating line 73 on the right tail portion 72 among the tail portion 72,72 so that the pawls 90 project toward the left tail portion 72 from the right tail portion 72 in front of and behind the joining boss 74. Further, an engaging hole 91 and a pawl 92 are also formed on a rear end portion of the right rear cover 21.

On the left tail portion 72, corresponding to the right tail portion 72, engaging recessed portions 93, 93, a joining boss 74, a pawl 94, and an engaging recessed portion 95 are formed. When both mating lines 73 are brought into contact with each other, these parts are closely engaged with the parts formed on the right tail portion 72. Here, the right joining boss 74 and the left joining boss 74 are arranged in different heights so that the right joining boss 74 overlaps with the left joining boss 74.

Further, on front end portions of the rear covers 21, engaging projections 96 which project inwardly are respectively formed, and pawls which are formed on side edges of the vertically-extending portion 61 of the center cover 22 (omitted from the drawing) are engaged with the engaging projections 96.

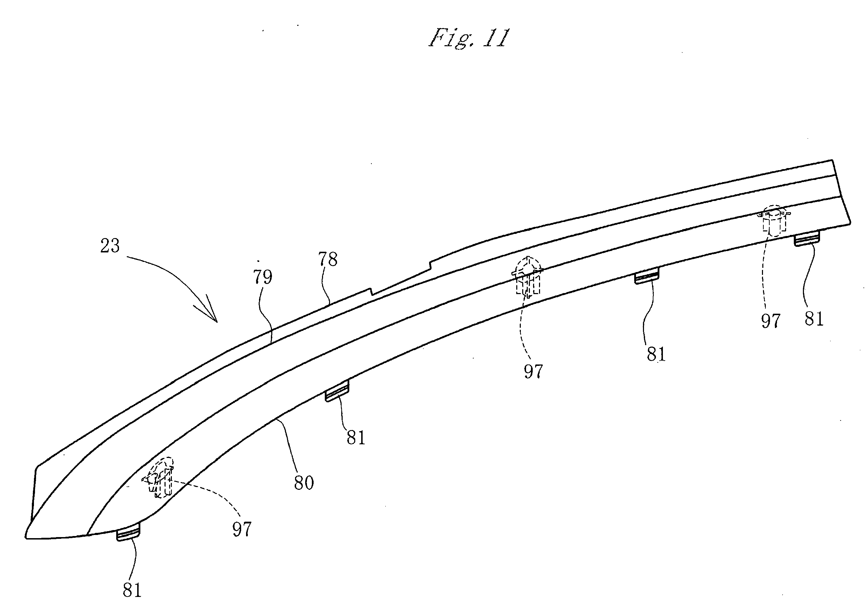

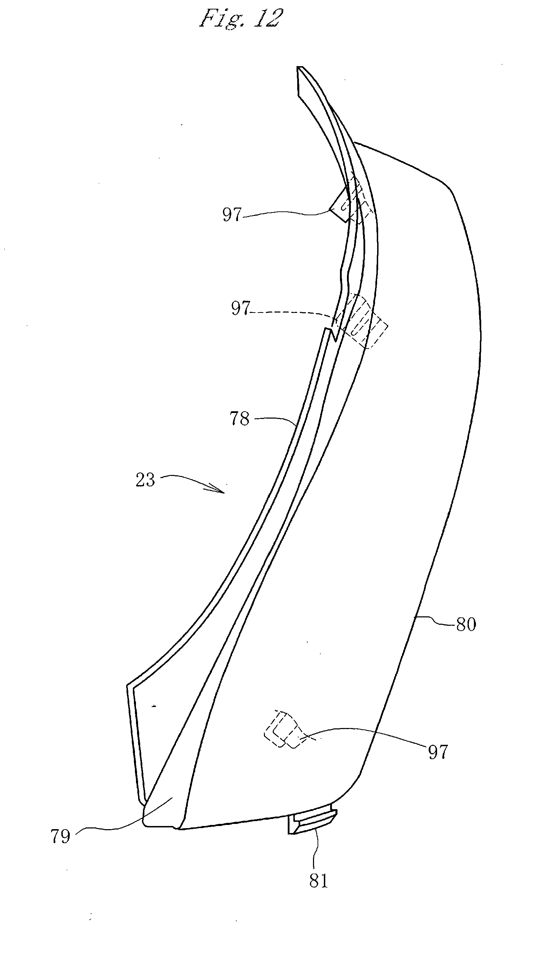

Fig. 11 is a side view of the garnish 23 and Fig. 12 is a front view of the garnish 23. As shown in these drawings, pawls 81 are formed in a projecting manner on a lower end edge 80 of the garnish 23 along the longitudinal direction of the garnish 23, and these pawls 81 are engaged with the engaging holes 82 (Fig. 10) formed in the rear cover 21.

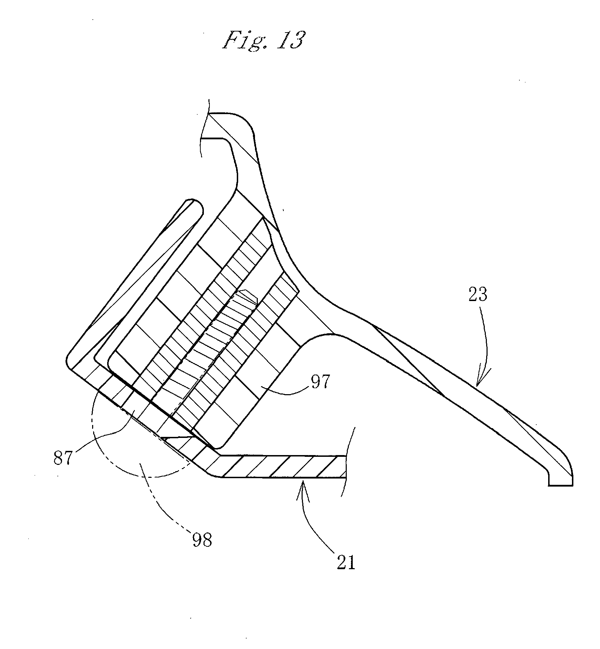

Further, a plurality of bosses 97 are integrally formed on a side surface of the garnish 23 in a projecting manner such that the bosses 97 extend in the oblique inward and downward direction. As shown in Fig. 13, distal ends of the bosses 97 are made to overlap with the mounting holes 87 (Fig. 9 and Fig. 10) of the rear cover 21, bolts 98 are inserted into the mounting holes 87 and the bosses 97 from an oblique inner and lower angle of the rear cover 21 thus joining the garnish 23 to the rear cover 21. Fig. 13 is a view showing a cross section of a joint portion of the mounting hole 87 and the boss 97.

As described above, by forming only a portion of the rear cover 21 along a side lower edge of the seat 20 as the garnish 23 which constitutes a part separate from the rear cover 21, it is possible to miniaturize a mold for forming the garnish 23. Accordingly, the remodeling of a mold can be easily performed thus easily enhancing the molding accuracy of the garnish 23. Further, the garnish 23 overlaps with the rear cover 21 from above and hence, the vehicle-body cover portion arranged along the side lower edge of the seat 20 has the duplicate structure and hence, the upper edge portion of the rear cover 21 can be reinforced by the garnish 23 which constitutes a separate body.

Further, the upper edge portion 78 of the garnish 23 can be fixed by making use of the groove 77 formed in the flange 68 which constitutes the side edge of the storing box 45 and hence, the upper edge portion 78 of the garnish 23 can be contiguously formed with the flange 68 of the storing box 45 whereby no gap is formed between the mating portions of both members thus enhancing the appearance of the vehicle.

Further, the rear erected flanges 85 which are continuously formed with the respective rear ends of the left and right garnishes 23 are formed on the rear cover 21, and the upper edges of the rear erected flanges 85 are fitted in the groove 77 formed in the flange 68 of the storing box 45 together with the upper edge 78 of the garnish 23 and hence, the upper edge of the rear cover 21 which surrounds the rear edge portion of the storing box 45 is continuously formed with the storing box 45. Accordingly, no gap is formed also in the rear portion of the rear cover 21 on which the garnish 23 is not mounted thus further enhancing the appearance of the vehicle.

Further, by forming the garnish 23 as a body separate from the rear cover 21, it is possible to easily cope to a small change such as a change of color tone or a change of a logo mark. Further, the remodeling of the molding which becomes necessary in such a case can be made small. Further, by making the garnish 23 and the rear cover 21 different from each other in color tone, a degree of freedom in design of the vehicle-body cover can be increased thus realizing the differentiation of products.

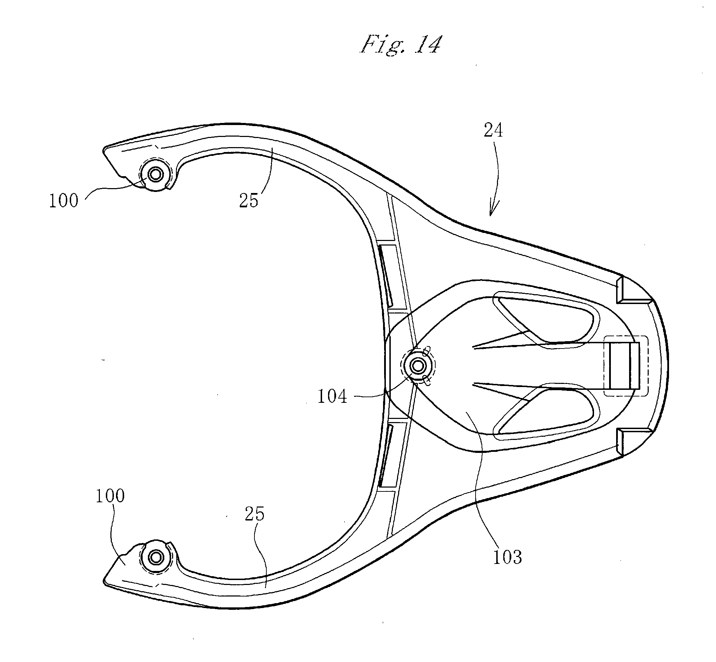

Fig. 14 is a plan view of the rear carrier 24. The rear carrier 24 is made of metal as a whole, and includes a pair of left and right grip portions 25 which extend frontward while forming an arm shape. Boss portions 100 which are formed on respective distal end portions of the grip portions 25 are inserted into the mounting holes 71 (Fig. 4) . The rear carrier 24 has the boss portions 100 thereof fixed to brackets 101 which are formed on a rear end portion of the rear fame 44 (Fig. 2) using bolts.

A rear portion of the grip portions 25 extends rearward from a rear end of the seat 20 and constitutes a main body portion 103 of the rear carrier 24 for supporting a baggage. A boss 104 is formed on a laterally center portion of front portion of the main body portion 103. A bolt (being omitted from the drawing) is inserted into the boss 104 and is fixed to a bracket 105 which extends upwardly from the center of the cross pipe 44a formed between rear end portions of the rear frames 44. Here, the rear carrier 24 overlaps with the tail portion 72 of the rear cover 21, the boss 104 is aligned with the joining boss 74 and, thereafter, the rear carrier 24 and the tail portion 72 are fastened together to the bracket 105 using the bolt (refer to Fig. 2).

Due to such constitution, it is possible to cover an mating portion between the lower end edge of the seat 20 and an upper portion of the rear cover 21 by making use of the grip portions 25 of the rear carrier 24 and hence, the good appearance of the vehicle can be maintained even when the garnish 23 is omitted. By painting the rear carrier 24 in the same color as the garnish 23, it is possible to make the garnish 23 and the grip portion 25 appear as if the garnish 23 and the grip portion 25 forms a single continuous member thus realizing appearance having feeling of integrity. Further, by making the garnish 23 and the grip portion 25 appear as an integral body in design, it is possible to make the garnish 23 and the grip portion 25 inconspicuous.

Here, although the grip portion 25 is a member for allowing a passenger sitting on a pillion seat to grip, it is not always necessary to use the grip portion 25 as the grip and the grip portion 25 may be used as a mounting portion of the rear carrier 24. Further, the grip portion 25 may be a grab rail which performs a single function as a grip member and has no function of the rear carrier 24.

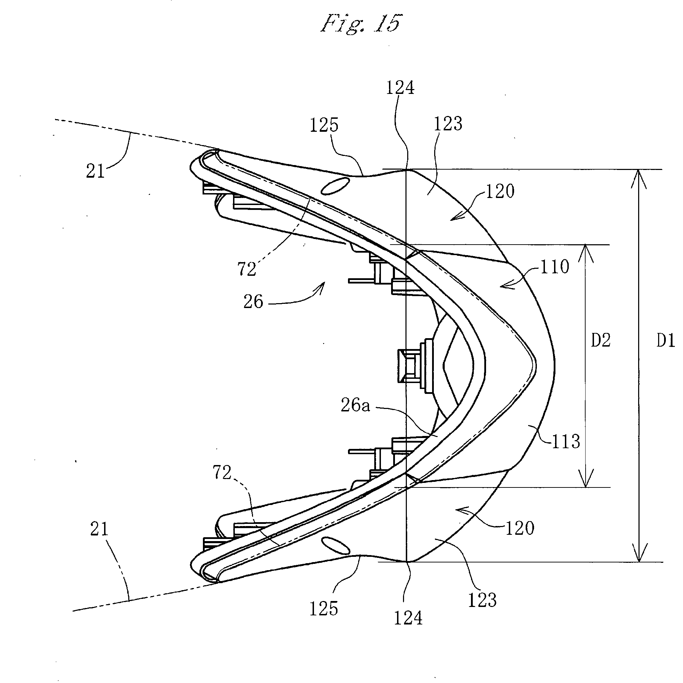

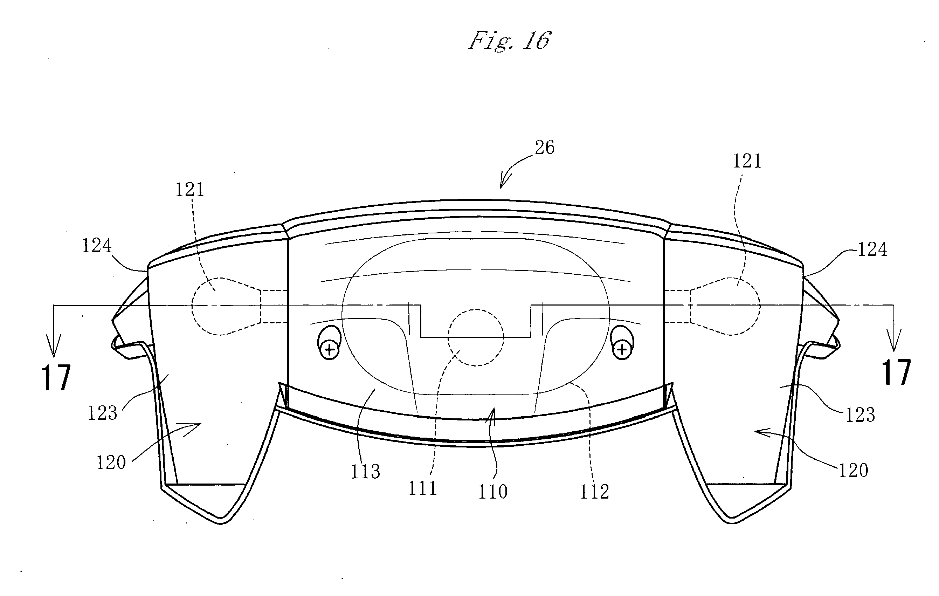

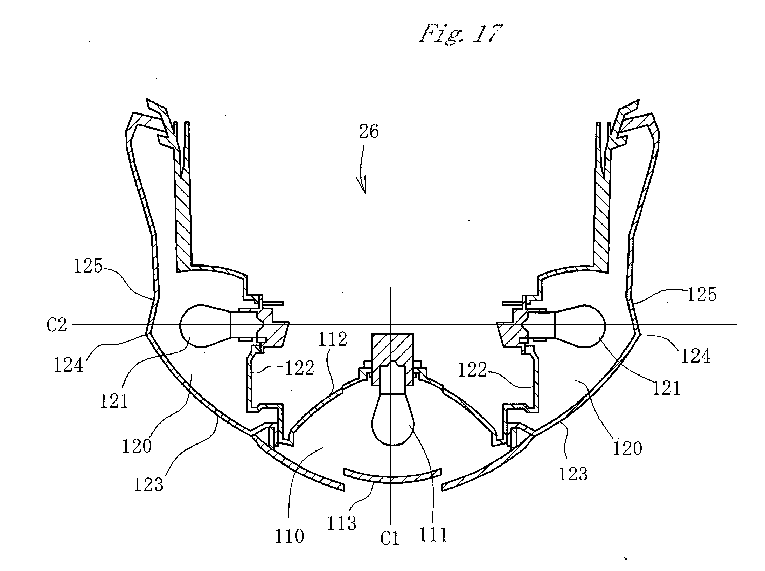

Next, the tail lamp unit 26 is explained. Fig. 15 is a plan view of the tail lamp unit 26, Fig. 16 is a back view of the tail lamp unit 26, and Fig. 17 is a planar cross-sectional view taken along a line 17-17 in Fig. 16. In these drawings, the tail lamp unit 26 is a combination lamp which is integrally formed of a center tail lamp 110 and left and right rear winkers 120, 120.

As shown in Fig. 17, a bulb 111 of the tail lamp 110 projects rearward so as to direct an optical axis C1 thereof in the direct rearward direction, and bulbs 121 of rear winkers 120 project in the laterally outward directions so as to direct an optical axis C2 thereof in the sideward directions while intersecting the optical axis C1.

A reflector 112 of the tail lamp 110 and reflectors 122 of the rear winkers 120 are continuously and integrally formed with each other. The reflector 112 has a concave curved surface, and the reflectors 122 have an approximately planar shape and are directed in the sideward directions.

A lens 113 of the tail lamp 110 has a curved surface which projects rearward. Although lenses 123 of the rear winkers 120 have rear sides thereof formed into a curved surface and are continuous with the lens 113, portions of the lenses 123 have bent portions 124 which are bent above the bulbs 121. Further, portions of the lenses 113 in front of the bent portions 124 are formed into recessed portions 125 which project inwardly.

As shown in Fig. 15, a mating portion 26a of the tail lamp unit 26 for the rear cover 21 has a substantially V-shape which expands in the frontward direction. To provide such constitution, a distance D1 between the lenses 123, 123 of the left and right rear winkers 120, 120 is set larger than a distance D2 of the rear cover 21 at the same position, and the lenses 123, 123 are configured to project in the lateral direction larger than the rear cover 21.

Such constitution satisfies a regulation on the distance between the left and right bulbs 121 as well as a regulation on areas of the reflectors 122 while satisfying a regulation on the distance D1 between the left and right lenses 123. Further, a vehicle width can be decreased.

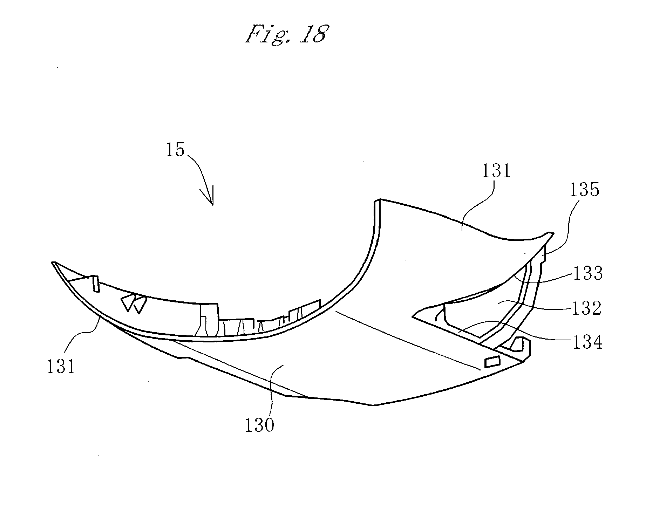

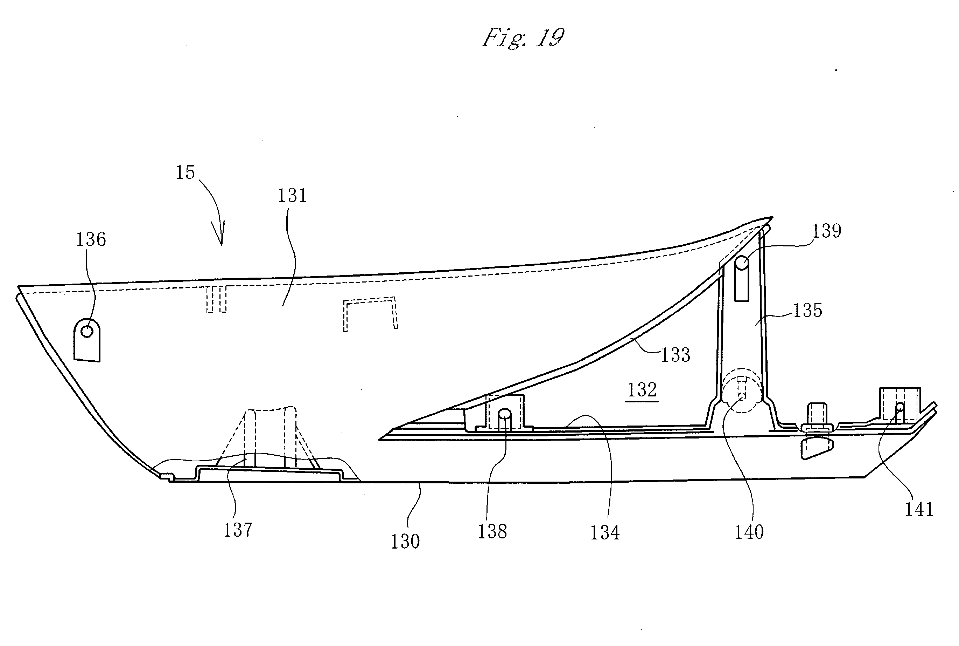

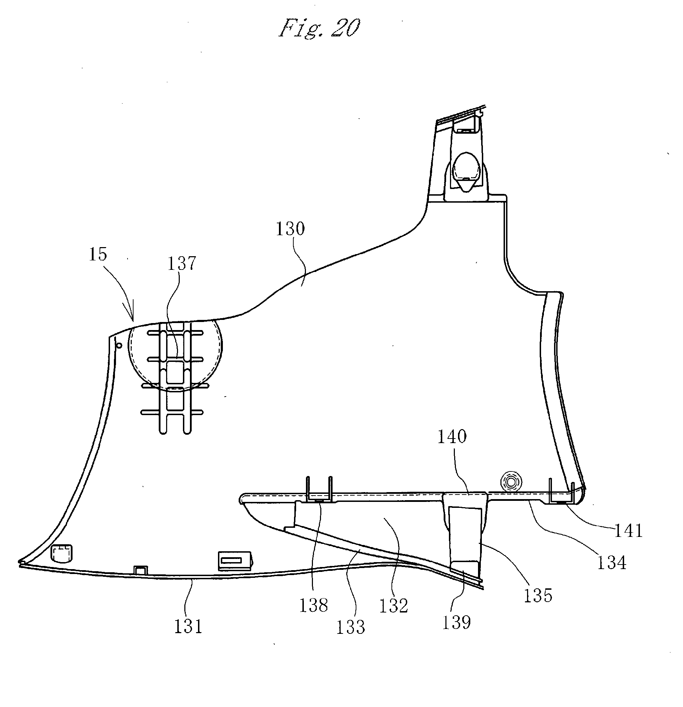

Next, the floor under skirt 15 and the undercover 16 are explained in detail. Fig. 18 is a perspective view of the floor under skirt 15, Fig. 19 is a side view of the floor under skirt 15, and Fig. 20 is a plan view (showing a left portion) of the floor under skirt 15. As shown in Fig. 18, Fig. 19 and Fig. 20, the floor under skirt 15 is a single member which is formed to transverse in the vehicle width direction below the step floor 3, and is a continuous unitary body consisting of a bottom portion 130 and both side portions 131.

On a rear half portion of each side portion 131, a substantially triangular-shaped notched portion (space) 132 is formed. The rear half portion of the side portion 131 further includes an oblique side portion 133 and a substantially-horizontal bottom side portion 134 which face the notched portion (space) 132. A rear end portion of the oblique side portion 133 and a longitudinally intermediate portion of the bottom side portion 134 are integrally connected with each other by way of a pillar portion 135.

As shown in Fig. 20, the oblique side portion 133 is inclined in a rearward and outwardly opened state, the bottom side portion 134 linearly extends in the longitudinal direction while being arranged inside the oblique side portion 133, and a rear end portion of the oblique side portion 133 is opened more outwardly than the bottom side portion 134. Accordingly, the pillar portion 135 is bent in an upwardly opened state (Fig. 18).

In Fig. 19, on front portions of both side portions 131, a boss 136 is formed. Mounting portions which respectively project from a lower end portion of the front cover 12 and a front end portion of the step floor 3 are fastened to the bosses 136 using bolts.

On a center portion of the front portion of the bottom portion 130, a substantially-crest-shaped rib 137 is formed, and the rib 137 is brought into contact with a lower end portion of the cross pipe 51 (Fig. 3) (Fig. 2).

On a front end portion of the bottom side portion 134, on upper and lower portions of the pillar portion 135, and on a rear end portion of the bottom side portion 134, mounting portions 138, 139, 140, 141 are respectively formed (Fig. 20).

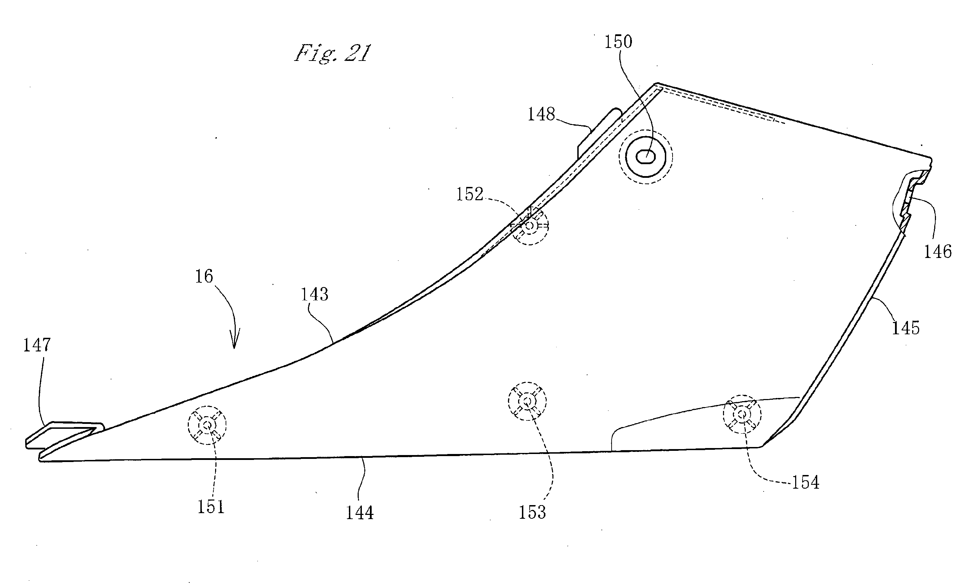

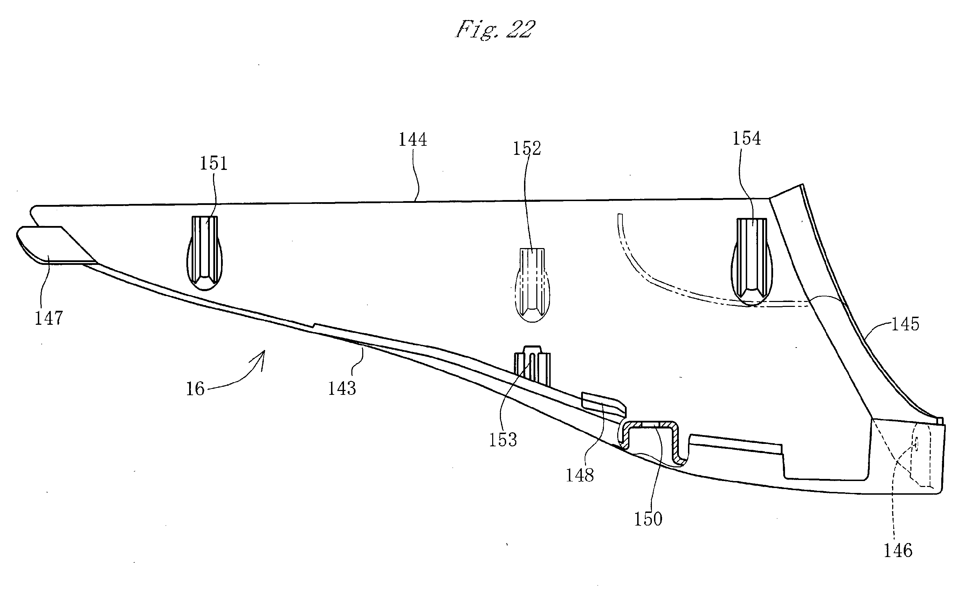

Fig. 21 is a side view of the under-cover 16, and Fig. 22 is a plan view of the under-cover 16.

In these drawings, the under-cover 16 has a substantially triangular shape as viewed in a side view so as to cover the notched portion (space) 132. The under-covers 16 are formed in pair consisting of left and right symmetrical under-covers. Although Fig. 21 and Fig. 22 show the left under-cover 16, the right under-cover 16 has the same structure as the left under-cover 16.

The under-cover 16 includes an inclined side 143 and a bottom side 144. Here, the inclined side 143 is brought into contact with the oblique side portion 133, while the bottom side 144 is brought into contact with the bottom side portion 134 (Fig. 19). A portion between rear end portions of the inclined side 143 and the bottom side 144 are bent inwardly so as to form a rear flange 145, and a mounting hole 146 is formed in an upper end portion of the flange 145. The flange 145 is made to overlap with a rear edge of the step holder 17 (Fig. 1) and is fixed to the step holder 17 from behind using a bolt.

On a front end portion and a rear portion of the inclined side 143, projections 147, 148 having a stepped shape are formed in an upwardly projecting manner. The front projection 147 projects in the oblique frontward and upward direction and overlaps with an inner side of both side portions 131 of the floor under skirt 15.

Further, a mounting hole 150 is formed in the inclined side 143 in the vicinity of the projection 148, and the undercover 16 is mounted on a nut portion 53a (Fig. 3) of the bracket 53 from a side using a bolt.

Numeral 151 to 154 indicate bosses and these bosses 151 to 154 are joined to the mounting portions 138 to 141 of the floor under skirt 15 from the inside using bolts. Due to such constitution, parts which are mounted on a lower portion of the vehicle body and are liable to be easily damaged by flying pebbles or the like during traveling can be detachably mounted as under-covers 16 which are relatively small-sized parts. Further, by forming the under-cover into the split structure consisting of the left and right separate bodies, the under-cover 16 becomes a more small-sized part. Accordingly, a portion of the floor under skirt 15 which is liable to be easily damaged is formed as the exchangeable separate undercover 16 and hence, even when the undercover 16 is broken, it is sufficient to change only the undercover 16 which is a small-sized part while leaving the floor under skirt 15 whereby the maintenance of the vehicle can be performed economically.

The present invention is not limited to the above-mentioned embodiment and various modifications and applications are conceivable within the principle of the present invention as defined in the appended claims. For example, a vehicle to which the present invention is applicable is not limited to a scooter-type motorcycle, and the present invention is applicable to various kinds of saddle-ride-type vehicle including a scooter-type motorcycle.

## Claims

1. A saddle-ride-type vehicle comprising a saddle-ride-type seat (20) and a vehicle-body cover structure comprising a rear cover (21) which covers both left and right sides of the saddle-ride-type seat from below,
wherein a longitudinal portion of the rear cover (21) which is arranged adjacent to a lower edge of the seat (20) and extends along the lower edge of the seat (20) is covered with a separate cover (23) which is constituted as a part separate from an upper edge portion of the rear cover (21) and the separate cover (23) is arranged so as to overlap with the rear cover (21) from above, wherein a storing box (45) is arranged below the seat (20),
**characterized in that** the rear cover (21) is resin-made, and **in that** an upper edge portion (78) of the separate cover (23) is inserted into a recessed portion which is arranged on a lower surface of a side edge portion of the storing box (45), and a lower edge portion (80) of the separate cover (23) is engaged with the rear cover (21).

2. The saddle-ride-type vehicle according to claim 1, wherein the separate cover (23) is constituted of a pair of left and right separate covers (23) which are arranged on at least both front sides of the rear cover (21), rear upper edge portions which are continuously formed with respective rear ends of the separate covers (23) are formed on the rear cover (21), and besides to the upper edges of the separate covers (23), the rear upper edge portions are also inserted into recessed portions arranged on lower surfaces of side edge portions of the storing box (45).

3. The saddle-ride-type vehicle according to claim 1, wherein a carrier (24) or a grip (25) which has a front portion thereof opened and has a substantially U-shape is arranged so as to surround both lateral sides and a rear side of a rear end portion of the seat (20), and a rear end portion of the separate cover (23) extends to the vicinity of a front end of the carrier (24) or the grip (25).

4. The saddle-ride-type vehicle according to claim 1, wherein the upper edge portion (78) of the separate cover (23) is formed in an upwardly raised flange shape (68) and is slightly inclined toward the center side in the vehicle width direction from a perpendicular position.

## Patentansprüche

1. Fahrzeug vom Sattelfahrtyp, umfassend einen Sitz (20) vom Sattelfahrtyp und eine Fahrzeugkörperabdeckungsstruktur, umfassend eine hintere Abdeckung (21), die sowohl die linke als auch die rechte Seite des Sitzes vom Sattelfahrtyp von unten abdeckt,
wobei ein longitudinaler Bereich der hinteren Abdeckung (21), der angrenzend an einen unteren Rand des Sitzes (20) angeordnet ist und sich entlang des unteren Rands des Sitzes (20) erstreckt, mit einer separaten Abdeckung (23) bedeckt ist, die als ein von einem oberen Randbereich der hinteren Abdeckung (21) separates Teil gebildet ist, und wobei die separate Abdeckung (23) derart angeordnet ist, dass sie mit der hinteren Abdeckung (21) von oben überlappt, wobei ein Aufbewahrungsfach (45) unter dem Sitz (20) angeordnet ist,
**dadurch gekennzeichnet, dass** die hintere Abdeckung (21) aus Harz hergestellt ist, und dass ein oberer Randbereich (78) der separaten Abdeckung (23) in einen Aussparungsbereich eingesetzt ist, der an einer unteren Fläche eines Seitenrandbereichs des Aufbewahrungsfachs (45) angeordnet ist, und dass ein unterer Randbereich (80) der separaten Abdeckung (23) in Eingriff mit der hinteren Abdeckung (21) ist.

2. Fahrzeug vom Sattelfahrtyp nach Anspruch 1, wobei die separate Abdeckung (23) als ein Paar aus einer linken und einer rechten separaten Abdeckungen (23) gebildet ist, die wenigstens an beiden Vorderseiten der hinteren Abdeckung (21) angeordnet sind, wobei hintere obere Randbereiche, die kontinuierlich mit jeweiligen hinteren Enden der separaten Abdeckungen (23) gebildet sind, an der hinteren Abdeckung (21) gebildet sind, und wobei neben den oberen Rändern der separaten Abdeckungen (23) die hinteren oberen Randbereiche ferner in Aussparungsbereiche eingesetzt sind, die an unteren Flächen von Seitenrandbereichen der Aufbewahrungsbox (45) angeordnet sind.

3. Fahrzeug vom Sattelfahrtyp nach Anspruch 1, wobei ein Träger (24) oder ein Griff (25), der einen offenen Vorderbereich und im Wesentlichen eine U-Form aufweist, derart angeordnet ist, dass er beide lateralen Seiten und eine hintere Seite eines hinteren Endbereichs des Sitzes (20) umgibt, und wobei ein hinterer Endbereich der separaten Abdeckung (23) sich bis in die Nähe eines vorderen Endes des Trägers (24) oder des Griffs (25) erstreckt.

4. Fahrzeug vom Sattelfahrtyp nach Anspruch 1, wobei der obere Randbereich (78) der separaten Abdeckung (23) in einer aufwärts erhöhten Flanschform (68) gebildet und geringfügig zur Zentrumsseite in der Fahrzeugbreitenrichtung von einer senkrechten Position geneigt ist.

## Revendications

1. Véhicule de type à selle comprenant un siège de type selle (20) et une structure de recouvrement de corps de véhicule comprenant un couvercle arrière (21) qui recouvre à la fois les côtés gauche et droit du siège de type selle à partir de dessous,
dans lequel une partie longitudinale du couvercle arrière (21) qui est agencée de manière adjacente à un bord inférieur du siège (20) et s'étend le long du bord inférieur du siège (20), est recouverte avec un couvercle séparé (23) qui est constitué comme une partie séparée d'une partie de bord supérieur du couvercle arrière (21) et le couvercle séparé (23) est agencé afin de chevaucher e couvercle arrière (21) à partir de dessus, dans lequel une boîte de rangement (45) est agencée au-dessous du siège (20),
**caractérisé en ce que** le couvercle arrière (21) est en résine, et **en ce qu'**une partie de bord supérieur (78) du couvercle séparé (23) est insérée dans une partie évidée qui est agencée sur une surface inférieure d'une partie de bord latéral de la boîte de rangement (45), et une partie de bord inférieur (80) du couvercle séparé (23) est mise en prise avec le couvercle arrière (21).

2. Véhicule de type à selle selon la revendication 1, dans lequel le couvercle séparé (23) est constitué d'une paire de couvercles séparés gauche et droit (23) qui sont agencés sur au moins deux côtés avant du couvercle arrière (21), des parties de bord supérieur arrière, qui sont formées de manière continue avec des extrémités arrière respectives des couvercles séparés (23), sont formées sur le couvercle arrière (21) et en plus des bords supérieurs des couvercles séparés (23), les parties de bord supérieur arrière sont également insérées dans des parties évidées agencées sur des surfaces inférieures des parties de bord latéral de la boîte de rangement (45).

3. Véhicule de type à selle selon la revendication 1, dans lequel un support (24) ou une prise (25), qui a sa partie avant ouverte et a sensiblement une forme de U, est agencé(e) afin d'entourer les deux côtés latéraux et un côté arrière d'une partie d'extrémité arrière du siège (20) et une partie d'extrémité arrière du couvercle séparé (23) s'étend à proximité d'une extrémité avant du support (24) ou de la prise (25).

4. Véhicule de type à selle selon la revendication 1, dans lequel la partie de bord supérieur (78) du couvercle séparé (23) est formée selon une forme de bride relevée vers le haut (68) et est légèrement inclinée vers le côté central dans le sens de la largeur du véhicule à partir d'une position perpendiculaire.
